# EUROPÄISCHE PATENTSCHRIFT

(11) **EP 2 711 211 B1**
(45) Veröffentlichungstag und Bekanntmachung des Hinweises auf die Patenterteilung: **13.01.2016**
(21) Anmeldenummer: 13004598.2
(22) Anmeldetag: 20.09.2013
(51) Int. Cl.: B60G 3/01, B62D 7/06

(54) **Radaufhängung für ein Schwerlast-Transportfahrzeug sowie ein eine derartige Radaufhäungung verwendendes Schwerlast-Transportfahrzeug**
Wheel suspension for a heavy duty transport vehicle and heavy duty transport vehicle using such a wheel suspension
Suspension de roue pour poids-lourd et poids-lourd utilisant une suspension de roue de ce type

(30) Priorität: 20.09.2012 DE 102012018576; 20.09.2012 DE 202012009042 U
(43) Veröffentlichungstag der Anmeldung: 26.03.2014
(73) Patentinhaber: Scheuerle Fahrzeugfabrik GmbH, 74629 Pfedelbach (DE)
(72) Erfinder: Bannert, Kurt, 74629 Pfedelbach (DE); Kohler, Andreas, 74629 Pfedelbach (DE)
(74) Vertreter: Leitner, Waldemar

(56) Entgegenhaltungen:
- DE-A1- 3 743 203
- DE-A1- 19 813 796

## Beschreibung

Die Erfindung betrifft eine Radaufhängung für ein Schwerlast-Transportfahrzeug mit einem Fahrgestell, mindestens einer lenkbaren Radeinheit und einer Lenkung für die mindestens eine Radeinheit, wobei die Radaufhängung einen zwischen dem Fahrgestell und der jeweiligen Radeinheit angeordneten Hydraulikzylinder mit einem Zylinderrohr und einer Kolbenstange umfasst, wobei eine Längsmittelachse des Hydraulikzylinders beim Lenken die Drehachse der Radeinheit bildet, wobei das Zylinderrohr um die Längsmittelachse drehbar und axial unbeweglich am Fahrgestell befestigbar ist, und wobei die Lenkung am Zylinderrohr oder an einem starr mit dem Zylinderrohr verbundenen Bauelement der Radaufhängung angreift, sowie ein eine derartige Radaufhängung verwendendes Schwerlast-Transportfahrzeug.

Die DE 37 43 203 B offenbart in Fig. 8 und der zugehörigen Beschreibung eine Radaufhängung der eingangs genannten Art. Die Kolbenstange ist dort hohl und weist einen unrunden Innenumfang auf, der auf dem entsprechend unrunden Außenumfang einer im Inneren der Kolbenstange angeordneten und fest mit dem Zylinderrohr verbundenen Achse geführt und auf diese Weise axial verschiebbar und drehfest mit der Kolbenstange verbunden ist.

Weiter offenbart die DE 198 13 796 A1 ein Federbein mit einem an einem Fahrzeugrahmen befestigbaren Außenrohr, einem mittels einer Kolben-/Zylindereinheit nach unten aus dem Außenrohr ausfahrbaren Radträger und einer am oberen Ende des Federbeins angeordneten Lenkung, deren Lenkkräfte über die Kolben/Zylindereinheit und von dieser über eine Keilverzahnung auf ein innerhalb des Außenrohrs axial verschiebbares Führungsrohr übertragen werden, das fest mit dem Radträger verbunden ist.

Dadurch, dass entweder zwischen der Kolbenstange und dem Zylinderrohr oder um das Zylinderrohr herum ein weiteres röhrenförmiges Bauteil vorgesehen ist, ist der Material- und Fertigungsaufwand relativ groß. Auch nimmt der Außendurchmesser des Federbeins bei gleicher Stabilität der Kolbenstange zu.

Aus der DE 2848585 A1 ist eine Radaufhängung sowie ein eine derartige Radaufhängung verwendendes Schwerlast-Transportfahrzeug der eingangs genannten Art bekannt. Um mit geringem konstruktivem Aufwand für einen hydraulischen Achsausgleich zu sorgen, ist dort jede der beiden Achshälften oder Radeinheiten einer Achse über einen Hydraulikzylinder am Fahrgestell aufgehängt. Die Kolbenstange jedes Hydraulikzylinders ist mit ihrem oberen Ende starr am Fahrgestell befestigt, während das Zylinderrohr über einen U-förmigen Bügel starr mit dem Rad verbunden ist. Das Zylinderrohr ist in einer vertikalen Führungsbuchse beweglich, so dass es sich beim Achsausgleich zusammen mit dem Rad in Bezug zur Kolbenstange und in Bezug zur Führungsbuchse entlang der vertikalen Längsmittelachse des Hydraulikzylinders verschieben kann, die beim Lenken als Drehachse dient. Zur Lenkung der Achshälfte oder Radeinheit dient dort ein an der Führungsbuchse ansetzender Lenkhebel, der die Führungsbuchse beim Lenken um die Längsmittelachse des Hydraulikzylinders verschwenkt und beim Achsausgleich stets in derselben Höhe unter der Führungsbuchse stehen bleibt. Zum Drehen der Achshälfte oder Radeinheit muss jedoch die Schwenkbewegung der Führungsbuchse auf das drehfest mit der Achshälfte oder Radeinheit verbundene Zylinderrohr des Hydraulikzylinders übertragen werden. Dies stößt auf Schwierigkeiten, wenn die Führungsbuchse gleichzeitig in axialer Richtung gegenüber dem Fahrgestell abgestützt werden soll, um Axialbewegungen der Führungsbuchse und damit ein Auftreten eines Sturzes bzw. eine Veränderung des Sturzes beim Achsausgleich zu verhindern.

Ausgehend hiervon liegt der Erfindung die Aufgabe zugrunde, eine Radaufhängung für ein Schwerlast-Transportfahrzeug der eingangs genannten Art dahingehend zu verbessern, dass beim Achsausgleich ebenso wie beim Anheben oder Absenken des Fahrgestells mittels der Hydraulikzylinder ein Auftreten eines Sturzes bzw. eine Veränderung des Sturzes vermieden werden kann.

Zur Lösung dieser Aufgabe wird erfindungsgemäß vorgeschlagen, dass die Kolbenstange eine Außenverzahnung aufweist, die mit einer Innenverzahnung des Zylinderrohrs im Zahneingriff steht.

Durch die erfindungsgemäße Merkmalskombination kann sich beim Achsausgleich oder beim Anheben bzw. Absenken des Fahrgestells in Bezug zu der erfindungsgemäßen Radeinheit das gegenüber dem Fahrgestell axial abgestützte Zylinderrohr des Hydraulikzylinders nicht in Richtung von dessen Längsmittelachse in Bezug zum Fahrgestell bewegen. Dadurch wird sichergestellt, dass sich auch der Angriffspunkt der Lenkung am Zylinderrohr oder an dem starr mit dem Zylinderrohr verbundenen Bauelement in Bezug zum Fahrgestell nicht in Richtung der Längsmittelachse des Hydraulikzylinders bewegen kann, wodurch beim Achsausgleich oder beim aktiven Anheben bzw. Absenken des Fahrgestells ein Sturz der Räder vermieden werden kann. Um die Drehbewegung des in Richtung der Längsmittelachse axial unverschiebbar am Fahrgestell befestigten Zylinderrohrs in eine Drehbewegung der in Richtung der Längsmittelachse in Bezug zum Fahrgestell axial beweglichen Radeinheit umzuwandeln, ist vorgesehen, dass das Zylinderrohr und die Kolbenstange des Hydraulikzylinders drehfest aber axial verschiebbar miteinander verbunden sind und dass die Kolbenstange starr mit der Radeinheit verbunden ist. Auf diese Weise wird die Radeinheit beim Lenken zusammen mit der Kolbenstange und dem Zylinderrohr des Hydraulikzylinders um dessen Längsmittelachse gedreht. Die drehfeste Verbindung zwischen dem Zylinderrohr und der Kolbenstange des Hydraulikzylinders wird erfindungsgemäß durch eine Außenverzahnung der Kolbenstange und eine mit der Außenverzahnung der Kolbenstange kämmende Innenverzahnung des Zylinderrohrs erzielt, die jedoch nicht um den gesamten Umfang der Kolbenstange und des Zylinderrohrs herum vorgesehen sein müssen.

Durch die erfindungsgemäße Maßnahme wird in vorteilhafter Art und Weise erreicht, dass die Gefahr von Lenkfehlern reduziert, wenn nicht eliminiert wird, da das Höhenverhältnis zwischen Lenkgestänge und Zylinderrohr im wesentlichen konstant oder konstant bleibt. Indem die Außenverzahnung der Kolbenstange und die Innenverzahnung des Zylinderrohrs zusammenwirken, wird der vertikale Ausgleich zwischen einem Fahrgestell eines die erfindungsgemäße Radaufhängung verwendenden Fahrzeugs zur Fahrbahn vorteilhafterweise im wesentlichen oder nur durch die erfindungsgemäße Radaufhängung bewirkt.

Um die drehbare Befestigung des Hydraulikzylinders im Fahrgestell zu erleichtern, ist gemäß einer vorteilhaften Weiterbildung der Erfindung der Hydraulikzylinder zweckmäßig so montiert, dass das geschlossene obere Ende des Zylinderrohrs in einer komplementären Ausnehmung des Fahrgestells drehbar gelagert ist und dass die Kolbenstange nach unten aus dem offenen unteren Ende des Zylinderrohrs ausfahrbar ist.

Um den bei ausgefahrener Kolbenstange aus dem Zylinderrohr überstehenden Teil der Kolbenstange vor einer Beschädigung oder Verschmutzung zu schützen, ist gemäß einer weiteren vorteilhaften Weiterbildung der Erfindung vorteilhaft eine starr mit der Radeinheit und dem unteren Ende der Kolbenstange verbundene röhrenförmige Aufnahmebuchse vorgesehen, die in Bezug zum Zylinderrohr axial beweglich ist und das untere Ende des Zylinderrohrs mit dem überstehenden Teil der Kolbenstange dichtend umgibt.

Gemäß einer anderen vorteilhaften Weiterbildung der Erfindung überträgt die Aufnahmebuchse beim Lenken die Drehung des Zylinderrohrs und der Kolbenstange auf die Radeinheit und ist dazu bevorzugt starr mit dem unteren Ende der Kolbenstange verbunden. Durch die starre Verbindung der Aufnahmebuchse mit der Kolbenstange und die drehfeste Verbindung zwischen der Kolbenstange und dem Zylinderrohr des Hydraulikzylinders wird somit beim Lenken die gesamte, aus dem Hydraulikzylinder und der Aufnahmebuchse bestehende Radaufhängung gedreht.

Eine weitere vorteilhafte Weiterbildung der Erfindung sieht vor, dass die Lenkung am Zylinderrohr selbst angreift, der Angriff vorteilhaft über einen Drehantrieb erfolgt, der zweckmäßig mit dem oberen Ende des Zylinderrohrs im Eingriff steht, um das letztere beim Lenken zusammen mit der Radeinheit um die Längsmittelachse des Hydraulikzylinders zu drehen.

Eine weitere vorteilhafte Weiterbildung der Erfindung sieht vor, dass dort, wo die Lenkung an einem starr mit dem Zylinderrohr verbundenen Bauelement angreift, es sich bei dem Bauelement zweckmäßig um einen Lenkhebel handelt, an dem die Lenkung vorteilhaft im radialen Abstand von der Längsmittelachse des Hydraulikzylinders angreift, beispielsweise über einen Lenker oder eine Spurstange. Wenn beim Lenken der Lenker oder die Spurstange bewegt wird, wird diese Bewegung in eine Drehung des Zylinderrohrs um die Längsmittelachse umgewandelt.

Eine weitere vorteilhafte Weiterbildung der Erfindung sieht vor, dass dort, wo der Angriffspunkt der Lenkung am Zylinderrohr sehr tief liegt, beispielsweise weil die Lenkung unterhalb von einem in Längsrichtung des Fahrgestells verlaufenden Längs- oder Kastenträger angeordnet ist, der Lenkhebel vorteilhaft einen länglichen, zum Hydraulikzylinder parallelen Mittelteil und zwei an beiden Enden in seitlicher Richtung über den Mittelteil überstehende Endteile umfasst, wobei der obere Endteil starr mit dem Zylinderrohr und der untere Endteil gelenkig mit dem Lenker oder der Spurstange verbunden ist. Der längliche Mittelteil besteht zweckmä-ßig aus einem zylindrischen Rohr, das am oberen und unteren Ende durch den plattenförmigen Endteil verschlossen ist.

Eine besonders gute Lastübertragung vom Fahrgestell über den Hydraulikzylinder auf die zugehörige Radeinheit wird erreicht, wenn die Längsmittelachse des Hydraulikzylinders senkrecht zu einer Ladefläche des Fahrgestells ausgerichtet ist und damit auch senkrecht zu einer Fahrbahnoberfläche, so dass die Richtung der Kraftübertragung der Richtung der Schwerkraft der transportierten Last entspricht. Dies ist insbesondere dann von Vorteil, wenn gemäß einer anderen bevorzugten Weiterbildung der Erfindung die Radeinheit ausschließlich über den Hydraulikzylinder mit dem Fahrgestell verbunden ist.

Eine weitere vorteilhafte Weiterbildung der Erfindung sieht vor, dass es sich bei dem Hydraulikzylinder zweckmäßigerweise um einen so genannten Achsausgleichszylinder handelt, der hydraulisch mit einem entsprechenden Achsausgleichszylinder einer zweiten Radeinheit derselben Achse verbunden ist, um einen passiven Achsausgleich zu ermöglichen. Jedoch können die Hydraulikzylinder sämtlicher Radeinheiten darüber hinaus mit Vorteil auch verwendet werden, um das Fahrgestell bei Bedarf in Bezug zu den Radeinheiten aktiv anzuheben bzw. wieder abzusenken. Zu diesem Zweck sind die Zylinderrohre sämtlicher Hydraulikzylinder zweckmäßig mit einem Hydraulikaggregat bzw. einem Hydrauliktank verbindbar, um zum Ausfahren der Kolbenstangen Hydraulikflüssigkeit in Kolbenräume der Zylinder zuzuführen bzw. um die Hydraulikflüssigkeit zum Einfahren der Kolbenstangen aus den Kolbenräumen wieder in den Hydrauliktank abzulassen. Der Hydraulikzylinder wird im Folgenden auch als Ausgleichszylinder oder Achsausgleichszylinder bezeichnet.

Wenn im Rahmen der vorliegenden Erfindung der Begriff Radeinheit verwendet wird, dann soll dieser Begriff mindestens ein aus Felge und Bereifung bestehendes Rad, vorzugsweise zwei Räder, sowie einen das Rad bzw. die Räder tragenden Radträger mit einer in Radlagern drehend gelagerten Radtrommel umfassen.

Im Folgenden wird die Erfindung anhand eines in der Zeichnung dargestellten Ausführungsbeispiels näher erläutert. Es zeigen:
- Figur 1:: eine Rückseitenansicht eines mehrachsigen Schwerlast-Transportfahrzeugs bei abgesenkter Ladefläche,
- Figur 2:: eine Seitenansicht einer Achse des Transportfahrzeugs in Richtung des Pfeils A in Fig. 1,
- Figur 3:: eine Rückseitenansicht des Transportfahrzeugs entsprechend Fig. 1, jedoch bei angehobener Ladefläche,
- Figur 4:: eine Seitenansicht einer Achse des Transportfahrzeugs in Richtung des Pfeils A in Fig. 3,
- Figur 5:: eine Unterseitenansicht einer Achse des Transportfahrzeugs,
- Figur 6:: eine vergrößerte Schnittansicht entlang der Linie VI-VI in Fig. 5, und
- Figur 7:: eine vergrößerte Schnittansicht entlang der Linie VII-VII in Fig. 5.

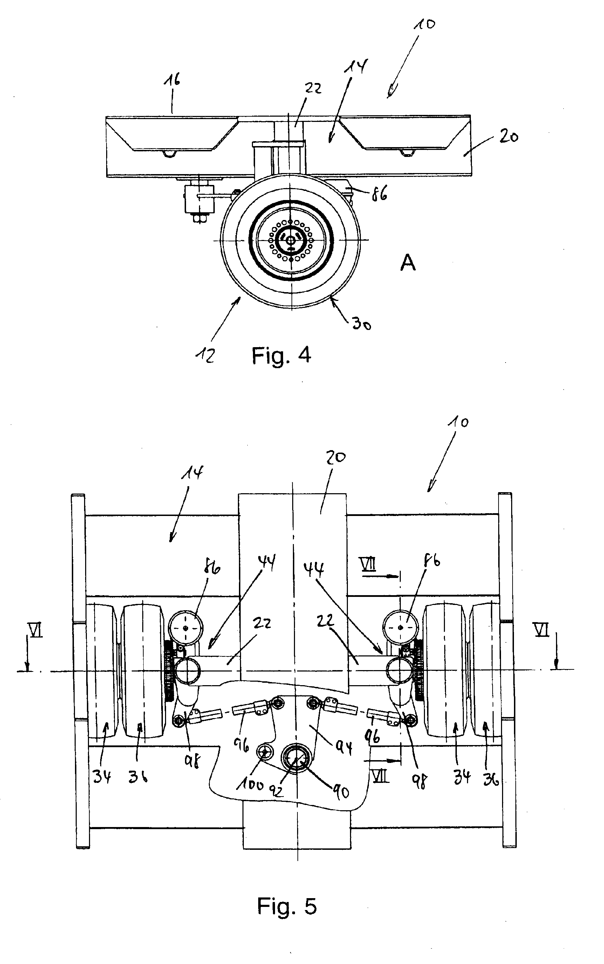

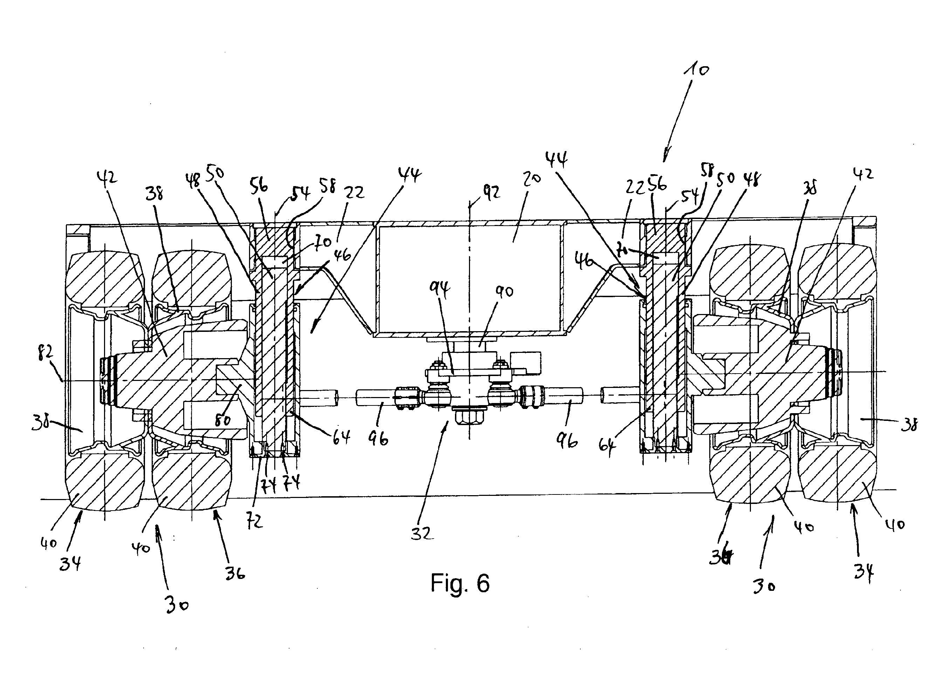

Das in der Zeichnung dargestellte mehrachsige Schwerlast- Transportfahrzeug 10, von dem nur eine Achse 12 dargestellt ist, umfasst ein Fahrgestell 14 oder Fahrwerk mit einer zu einer Fahrbahnoberfläche parallelen ebenen Ladefläche 16 an seiner Oberseite. Das Fahrgestell 14 weist eine auf den Achsen 12 abgestützte Plattform 18 mit einem unterhalb der Ladefläche 16 angeordneten kastenförmigen Längsträger 20 mit einem rechteckigen Querschnitt auf, der sich über die gesamte Länge des Fahrgestells 14 erstreckt und das Gewicht einer auf der Plattform 18 transportierten Last (nicht dargestellt) auf die einzelnen Achsen 12 verteilt. Wie am besten in Fig. 5 dargestellt, sind im Bereich von jeder Achse 12 zwei kurze Querträger 22 vorgesehen, die nach entgegengesetzten Seiten über den Längsträger 20 überstehend an diesem angeschweißt sind und an ihrem Ende jeweils eine Radeinheit 30 der Achse 12 tragen. Wie in Fig. 6 dargestellt, nehmen die vertikalen Abmessungen der Querträger 22 zuerst vom Längsträger 20 weg ab und bleiben dann entlang eines äußeren Endes des Querträgers 22 konstant.

Jede der beiden Radeinheiten 30 ist über einen der Querträger 22 einzeln am Fahrgestell 14 aufgehängt. Zum Lenken der beiden Radeinheiten 30 jeder Achse 12 dient eine gemeinsame Lenkung 32. Jede der Radeinheiten 30 umfasst zwei koaxiale Räder 34, 36, die jeweils eine Felge 38 und einen Reifen 40 umfassen und in umgekehrter Ausrichtung auf einer in Radlagern (nicht dargestellt) drehbar gelagerten Radtrommel 42 befestigt sind, wie am besten in Fig. 6 dargestellt.

Jede der Radeinheiten 30 ist mit der Plattform 18 durch eine Radaufhängung 44 verbunden, die einen Ausgleichszylinder 46 mit einem Zylinderrohr 48 und einer Kolbenstange 50 sowie eine das untere Ende des Ausgleichszylinders 46 umgebende Aufnahmebuchse 52 umfasst.

Der Ausgleichszylinder 46 ist senkrecht zur Ladefläche 16 und damit zur Fahrbahnoberfläche ausgerichtet und stellt neben der Lenkung 32 die einzige Verbindung zwischen dem Fahrgestell 14 und der Radeinheit 30 dar.

Das Zylinderrohr 48 besitzt ein zur vertikalen Längsmittelachse 54 des Ausgleichszylinders 46 rotationssymmetrisches oberes Ende 56, das drehbar und in Richtung der Längsmittelachse 54 unverschiebbar in einer allgemein komplementären, nach oben offenen Aufnahmebuchse 58 im benachbarten Ende des Querträgers 22 befestigt ist. Zur drehbaren Lagerung des oberen Endes 56 des Zylinderrohrs 48 enthält die Aufnahmebuchse 58 zwei Gleitlager 60. Unmittelbar unterhalb von der Aufnahmebuchse 58 ist das Zylinderrohr 48 an seinem äußeren Umfang mit einem überstehenden Bund 62 versehen.

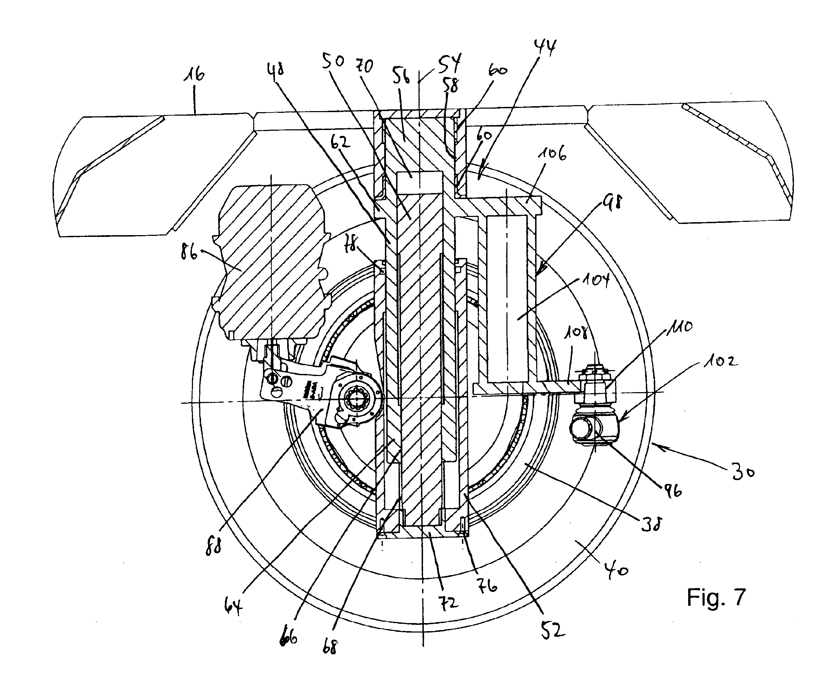

Das Zylinderrohr 48 weist ein offenes unteres Ende 64 auf, durch das sich das untere Ende der Kolbenstange 50 erstreckt. Wie in Fig. 7 dargestellt, ist das untere Ende 64 des Zylinderrohrs 48 mit einer Innenverzahnung 66 versehen, die mit einer komplementären Außenverzahnung 68 auf einem Großteil der Länge der Kolbenstange 50 kämmt, um die Kolbenstange 50 axial beweglich und drehfest mit dem Zylinderrohr 48 zu koppeln.

Auf dem Bund 62 der Zylinderrohre 48 von sämtlichen Ausgleichszylindern 46 stützt sich der Längsträger 20 über die Unterseiten der Querträger 22 ab, um die Gewichtskraft des Fahrgestells 14 und der transportierten Last über sämtliche Ausgleichszylinder 46 zu den zugehörigen Radeinheiten 30 zu übertragen.

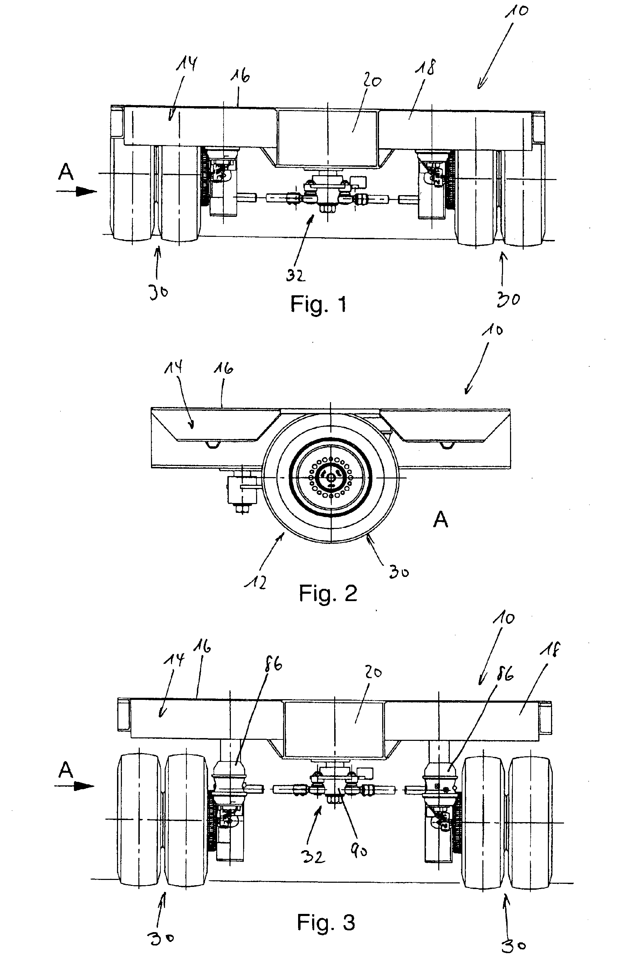

Das obere Ende der Kolbenstange 50 begrenzt zusammen mit dem Zylinderrohr 48 einen Kolbenraum 70. Der Kolbenraum 70 ist zum Achsausgleich über eine Verbindungsleitung (nicht dargestellt) mit dem Kolbenraum 70 des Ausgleichszylinders 46 der anderen Radeinheit 30 derselben Achse 12 verbunden. Weiter sind die Kolbenräumen 70 aller Ausgleichszylinder 46 zum einen durch Hydraulikleitungen (nicht dargestellt) mit einer Hydraulikpumpe (nicht dargestellt) und zum anderen mit einem Hydrauliktank (nicht dargestellt) verbunden. Dadurch kann den Kolbenräumen 70 unter Druck stehende Hydraulikflüssigkeit zugeführt bzw. die Hydraulikflüssigkeit wieder in den Tank abgelassen werden, um die Plattform 18 zwischen einer in Fig. 1 und 2 dargestellten abgesenkten Stellung und einer in Fig. 3 und 4 dargestellten angehobenen Stellung oder einer beliebigen Zwischenstellung auf und ab zu bewegen.

Wie in Fig. 6 dargestellt, sind die Innenverzahnung 66 und die Außenverzahnung 68 nicht um den ganzen Umfang der Kolbenstange 50 und des Zylinderrohrs 48 herum vorgesehen und erstrecken sich auch nicht bis in einen an den Kolbenraum 70 angrenzenden Teil der Kolbenstange 50 und des Zylinderrohrs 48, um für eine bessere Abdichtung des Kolbenraums 70 zu sorgen.

Das untere Ende der Kolbenstange 50 stützt sich auf einem Bodenteil 72 der Aufnahmebuchse 52 ab, das durch Schrauben 74 mit der Kolbenstange 50 und durch Schrauben 76 mit dem Rest der Aufnahmebuchse 52 verbunden ist, um die Kolbenstange 50 starr mit der Aufnahmebuchse 52 zu verbinden.

In eine umlaufende Nut im oberen Ende der Aufnahmebuchse 52 ist eine Dichtung 78 eingesetzt, die gegen die äußere Umfangsfläche des Zylinderrohrs 48 anliegt und bei der Bewegung der Aufnahmebuchse 52 entlang des Zylinderrohrs 48 ein Eindringen von Verunreinigungen in die Aufnahmebuchse 52 verhindert.

An die Aufnahmebuchse 52 ist an einer Seite ein integraler Vorsprung 80 mit einem zylindrischen Ende angeformt, das in eine komplementäre zylindrische Ausnehmung der um die Radachse 82 drehbaren Radtrommel 42 eingreift. Wie am besten in Fig. 7 dargestellt, umfasst jede Radeinheit 30 weiter einen Radbremszylinder 86 mit einer Radbremse 88 zum Bremsen der Radtrommel 42.

Wie am besten in den Figuren 5 und 6 dargestellt, umfasst die Lenkung 32 für jede Achse 12 einen über die Unterseite des Mittelteils 22 des Längsträgers 20 nach unten überstehenden Lenkzapfen 90, um dessen vertikale Mittelachse 92 eine horizontale Lenkerplatte 94 drehbar ist. Wie am besten in Fig. 5 dargestellt, ist die Lenkerplatte 94 jeweils durch eine Lenkerstange 96 mit einem Lenkhebel 98 der beiden Radeinheiten 30 der Achse 12 verbunden und weist einen im Abstand von der Mittelachse 92 angeordneten Anlenkpunkt 100 für ein die Lenkerplatte 94 drehendes Lenkgestänge (nicht dargestellt) der Lenkung 32 auf. Die beiden Lenkerstangen 96 sind so an den beiden Radeinheiten 30 der Achse 12 und an der Lenkerplatte 94 angelenkt, dass sie bei Geradeausfahrt spiegelsymmetrisch zur Längsmittelebene des Fahrgestells 14 sind und bei einer Drehung der Lenkerplatte 94 dafür sorgen, dass die Radpaare der beiden Radeinheiten 30 mit derselben Drehrichtung ausgelenkt werden.

Wie am besten in Fig. 6 und 7 dargestellt, ist jede der beiden Lenkerstangen 96 an ihren beiden Enden mit einem Gelenkkopf 102 versehen, der erstens ein Verschwenken der Lenkerstange 96 in Bezug zur Lenkerplatte 94 bzw. zum Lenkhebel 98 um eine zur Längsachse der Lenkerstange 96 senkrechte Schwenkachse und zweitens bei der Montage der Lenkerstange 96 einen gewissen Ausgleich von Höhenunterschieden ermöglicht. Nach der Montage der Lenkerstange 96 behält diese jedoch ihre ursprüngliche allgemein horizontale Ausrichtung stets bei, da sich in Bezug zur Plattform 18 weder die Höhe des Angriffspunkts des mit der Lenkerplatte 94 verbundenen Gelenkkopfs 102 noch die Höhe des Angriffspunkts des mit dem Lenkhebel 98 verbundenen Gelenkkopfs 102 verändert.

Da einerseits die Lenkerstangen 96 wegen des Längsträgers 20 einen beträchtlichen vertikalen Abstand von der Ladefläche 16 aufweisen, andererseits jedoch der Lenkhebel 98 möglichst nahe am oberen Ende des Zylinderrohrs 48 angreifen sollte, um die Ausfahrlänge der Kolbenstange 50 zu maximieren, weist der Lenkhebel 98 einen vertikalen länglichen hohlzylindrischen Mittelteil 104 auf, der sich parallel zur Längsmittelachse 54 des Ausgleichszylinders 46 erstreckt, wie am besten in Fig. 7 dargestellt. Der Mittelteil 104 des Lenkhebels 98 ist am oberen und am unteren Ende durch zwei zur Längsmittelachse 54 senkrechte aufgeschweißte Endplatten 106 bzw. 108 verschlossen, die nach entgegengesetzten Seiten über den Mittelteil 104 überstehen. Die obere, einstückig mit dem Bund 62 verbundene Endplatte 106 weist eine vom Bund 62 umgebene Öffnung auf, in die das Zylinderrohr 48 eingeschweißt ist, während die untere Endplatte 108 eine konische Bohrung 110 zur Befestigung des benachbarten, unterhalb der Endplatte 108 angeordneten Gelenkkopfs 102 der Lenkerstange 96 aufweist.

Wenn sich das Transportfahrzeug 10 im Betrieb mit einem Teil seiner Länge auf einer seitwärts geneigten Fahrbahnoberfläche bewegt, findet in den betroffenen Achsen ein Achsausgleich statt. Dabei wird durch das Gewicht des Fahrgestells 14 und der Last aus dem Kolbenraum 66 des Ausgleichszylinders 64 auf der höher gelegenen Seite jeder Achse Hydraulikflüssigkeit in den Kolbenraum 66 des Ausgleichszylinders 64 auf der tiefer gelegenen Seite der Achse gedrückt, wodurch auf der höher gelegenen Seite die Kolbenstange 50 des Ausgleichszylinders 64 eingefahren und dadurch die Radeinheit 30 dort angehoben wird, während auf der tiefer gelegenen Seite die Kolbenstange 50 des Ausgleichszylinders 64 ausgefahren und dadurch die Radeinheit 30 dort abgesenkt wird. Dadurch wird das Gewicht des Fahrgestells 14 und der Last besser auf sämtliche Radeinheiten 30 verteilt und die Ladefläche 16 horizontal gehalten.

Weiter kann im Betrieb des Transportfahrzeugs 10 die Plattform 18 in Bezug zur Fahrbahnoberfläche zwischen der in Fig. 1 und 2 dargestellten abgesenkten Stellung und der in Fig. 3 und 4 dargestellten angehobenen Stellung hin und her bewegt werden, indem von der Hydraulikpumpe Hydraulikflüssigkeit in die Kolbenräume 66 sämtlicher Ausgleichszylinder 46 zugeführt bzw. wieder in den Hydrauliktank abgelassen wird. Durch das Absenken der Plattform 18 kann zum Beispiel die maximale Höhe des Transportfahrzeugs 10 zum Durchfahren einer Brücke oder Überführung verringert werden.

Zum Lenken der beiden Radeinheiten 30 einer Achse wird die Lenkerplatte 94 mittels des Lenkgestänges gedreht. Diese Bewegung wird über die Lenkerstangen 96 auf die Lenkhebel 98 der beiden Radeinheiten 30 der Achse 12 übertragen, um die Lenkhebel 98 zusammen mit den Zylinderrohren 48 und den Kolbenstangen 50 des zugehörigen Ausgleichszylinders 46 sowie der zugehörigen Aufnahmebuchse 52 und Radtrommel 42 mit derselben Drehrichtung um die Längsmittelachse 54 des zugehörigen Ausgleichszylinders 46 zu verschwenken und dadurch die Radpaare einzuschlagen.

Wegen des axial unbeweglich am Fahrgestell 14 befestigten und zusammen mit der Kolbenstange 50 sowie der Radeinheit 30 um die Längsmittelachse 54 des Ausgleichszylinders 46 drehbare Zylinderrohr 48 des Ausgleichszylinders 46 und den Angriff der Lenkung 32 an dem drehfest mit dem Zylinderrohr 48 verbundenen Lenkhebel 98 kann sich beim Achsausgleich oder beim Anheben bzw. Absenken des Fahrgestells 14 in Bezug zu den Radeinheiten 30 das Zylinderrohr 48 nicht entlang der Längsmittelachse 54 in Bezug zum Fahrgestell 14 bewegen. Dadurch wird sichergestellt, dass sich auch der Angriffspunkt der Lenkstange 96 am Lenkhebel 98 in Bezug zum Fahrgestell 14 nicht in dieser Richtung bewegen kann. Auf diese Weise kann ein Sturz der Räder 38, 40 beim Achsausgleich oder beim Anheben bzw. Absenken des Fahrgestells 14 in Bezug zu den Radeinheiten 30 vermieden werden.

## Patentansprüche

1. Radaufhängung für ein Schwerlast-Transportfahrzeug (10) mit einem Fahrgestell (14), mindestens einer lenkbaren Radeinheit (30) und einer Lenkung (32) für die mindestens eine Radeinheit (30), wobei die Radaufhängung (44) einen Hydraulikzylinder (46) mit einem Zylinderrohr (48) und einer Kolbenstange (50) umfasst, der zwischen dem Fahrgestell (14) und der jeweiligen Radeinheit (30) angeordnet ist, wobei eine Längsmittelachse (52) des Hydraulikzylinders (46) beim Lenken die Drehachse der Radeinheit (30) bildet, wobei das Zylinderrohr (48) um die Längsmittelachse (54) drehbar und axial unbeweglich am Fahrgestell (14) befestigbar ist, und wobei die Lenkung (32) am Zylinderrohr (48) oder an einem drehfest mit dem Zylinderrohr (48) verbundenen Bauelement (98) der Radaufhängung (44) angreift, **dadurch gekennzeichnet, dass** die Kolbenstange (50) eine Außenverzahnung (68) aufweist, die mit einer Innenverzahnung (66) des Zylinderrohrs (48) im Zahneingriff steht.

2. Radaufhängung nach Anspruch 1, **dadurch gekennzeichnet, dass** das Zylinderrohr (48) und die Kolbenstange (50) des Hydraulikzylinders (46) drehfest miteinander verbunden sind.

3. Radaufhängung nach einem der vorangehenden Ansprüche, **dadurch gekennzeichnet, dass** die Kolbenstange (50) starr mit einem Radträger der Radeinheit (30) verbunden ist

4. Radaufhängung nach einem der vorangehenden Ansprüche, **dadurch gekennzeichnet, dass** das obere Ende (56) des Zylinderrohrs (48) in einer Ausnehmung (58) des Fahrgestells (14) drehbar gelagert ist und dass die Kolbenstange (50) nach unten aus dem Zylinderrohr (48) ausfahrbar ist.

5. Radaufhängung nach einem der vorangehenden Ansprüche, **gekennzeichnet durch** eine starr mit der Radeinheit (30) und dem unteren Ende der Kolbenstange (50) verbundene röhrenförmige Aufnahmebuchse (52), die in Bezug zum Zylinderrohr (48) axial beweglich ist und das untere Ende des Zylinderrohrs (48) dichtend umgibt.

6. Schwerlast-Transportfahrzeug (10) mit einem Fahrgestell, einer Mehrzahl von lenkbaren Radeinheiten (30), einer Radaufhängung (44) und einer Lenkung (32) für mindestens einen Teil der Radeinheiten (30), **dadurch gekennzeichnet, dass** mindestens eine Radaufhängung (44) gemäß einem der Ansprüche 1 bis 5 ausgebildet ist.

7. Transportfahrzeug nach Anspruch 6, **dadurch gekennzeichnet, dass** die Lenkung (32) einen unmittelbar am oberen Ende des Zylinderrohrs (48) angreifenden Drehantrieb zum Verdrehen des Zylinderrohrs (48) um die Längsmittelachse (54) umfasst.

8. Transportfahrzeug nach Anspruch 6, **dadurch gekennzeichnet, dass** die Lenkung (32) im radialen Abstand von der Längsmittelachse (54) an einem starr mit dem Zylinderrohr (48) verbundenen Lenkhebel (98) angreift.

9. Transportfahrzeug nach Anspruch 8, **dadurch gekennzeichnet, dass** der Lenkhebel (98) einen zum Hydraulikzylinder (46) allgemein parallelen Mittelteil (104) und zwei in seitlicher Richtung über den Mittelteil (104) überstehende Endteile (106, 108) umfasst, von denen der obere Endteil (106) starr mit dem Zylinderrohr (48) und der untere Endteil (108) gelenkig mit einer Lenker- oder Spurstange (96) der Lenkung (32) verbunden ist.

10. Transportfahrzeug nach einem der vorangehenden Ansprüche 6 bis 9, **dadurch gekennzeichnet, dass** die Längsmittelachse (54) des Hydraulikzylinders (46) senkrecht zu einer Ladefläche (16) des Fahrgestells (14) ausgerichtet ist.

11. Transportfahrzeug nach einem der vorangehenden Ansprüche 6 bis 10, **dadurch gekennzeichnet, dass** die Radeinheit (30) ausschließlich über den Hydraulikzylinder (46) am Fahrgestell (14) abgestützt ist.

12. Transportfahrzeug nach einem der vorangehenden Ansprüche 6 bis 11, **dadurch gekennzeichnet, dass** der Hydraulikzylinder (46) ein Achsausgleichszylinder ist.

## Claims

1. Wheel suspension for a heavy duty transport vehicle (10), with a chassis (14), at least one steerable wheel unit (30) and a steering unit (32) for the at least one wheel unit (30), wherein the wheel suspension (44) has a hydraulic cylinder (46) with a cylinder tube (48) and a piston rod (50), which is arranged between the chassis (14) and the respective wheel unit (30), wherein a longitudinal central axis (52) of the hydraulic cylinder (46) forms the pivoting axis of the wheel unit (30) when steering, wherein the cylinder tube (48) can be connected to the chassis (14) rotably around the longitudinal center axis (54) and axially fixed, and wherein the steering unit (32) engages the cylinder tube (48) or a part (98) being connected torque-prove with the cylinder tube (48), **characterized in that** the piston rod (50) has an external toothing which is in engagement with an internal toothing (66) of the cylinder tube (48).

2. Wheel suspension according to claim 1, **characterized in that** the cylinder tube (48) and the piston rod (50) of the hydraulic cylinder (46) are connected torque-prove.

3. Wheel suspension according to one of the previous claims, **characterized in that** the piston rod (50) is fixedly connected with a wheel carrier of the wheel unit (30).

4. Wheel suspension according to one of the previous claims, **characterized in that** the upper end (56) of the cylinder tube (48) is rotably mounted in a clearance (58) of the chassis (14) and that the piston rod (50) is extendible out of the cylinder tube (48) downwards.

5. Wheel suspension according to one of the previous claims, **characterized by** a tube-like cup, which is fixedly connected with the wheel unit (30) and the lower end of the piston rod (50), said cup being axially moveable relative to the cylinder tube (48) and surround the lower end of the cylinder tube (48) sealingly.

6. Heavy duty transport vehicle (10) with a chassis, a plurality of steerable wheel units (30), a wheel suspension (44) and a steering unit (32) for at least a part of the wheel units (30), **characterized in that** at least one wheel suspension (44) is built according to one of the claims 1 to 5.

7. Transport vehicle according to claim 6, **characterized in that** the steering unit (32) comprises a rotary drive for rotating the cylinder tube (48) around the longitudinal central axis (54), which is directly fixed on the upper end of the cylinder tube (48).

8. Transport vehicle according to claim 6, **characterized in that** the steering unit (32) engages a steering lever (98) being connected with the cylinder tube (48), of a radial distance.

9. Transport vehicle according to claim 8, **characterized in that** the steering lever (98) comprises a middle part (104) being generally parallel to the hydraulic cylinder (46) and two end parts (106, 108) which protrude in lateral direction the middle part (104), the upper end part (106) being fixedly connected with the cylinder tube (48) and the lower end part (108) being pivotably connected with a steering or track rod (36) of the steering unit (32).

10. Transport vehicle according to one of the claims 6 to 9, **characterized in that** the longitudinal central axis (54) of the hydraulic cylinder (46) is aligned orthogonal to a load surface (16) of the chassis (14).

11. Transport vehicle according to one of the claims 6 to 10, **characterized in that** the wheel unit (30) is supported on the chassis (14) exclusively via the hydraulic cylinder (46).

12. Transport vehicle according to one of the claims 6 to 11, **characterized in that** the hydraulic cylinder (46) is an axially compensating cylinder.

## Revendications

1. Suspension de roue destinée à un véhicule de transport de charges lourdes (10) comprenant un châssis (14), au moins une unité de roue (30) dirigeable et une direction (32) pour l'unité de roue (30) au moins au nombre de une, sachant que la suspension de roue (44) comprend un vérin hydraulique (46) pourvu d'un tube de vérin (48) et d'une tige de piston (50), qui est disposée entre le châssis (14) et l'unité de roue (30) respective, sachant qu'un axe central longitudinal (52) du vérin hydraulique (46) forme, lors de l'opération de direction, l'axe de rotation de l'unité de roue (30), sachant que le tube de vérin (48) peut tourner autour de l'axe central longitudinal (54) et peut être fixé de manière immobile axialement au niveau du châssis (14), et sachant que la direction (32) vient en prise au niveau du tube de vérin (48) ou au niveau d'un composant (98), relié de manière solidaire en rotation au tube de vérin (48), de la suspension de roue (44), **caractérisée en ce que** la tige de piston (50) présente une denture extérieure (68), qui s'engrène avec une denture intérieure (66) du tube de vérin (48).

2. Suspension de roue selon la revendication 1, **caractérisée en ce que** le tube de vérin (48) et la tige de piston (50) du vérin hydraulique (46) sont reliés l'un à l'autre de manière solidaire en rotation.

3. Suspension de roue selon l'une quelconque des revendications précédentes, **caractérisée en ce que** la tige de piston (50) est reliée de manière rigide à un support de roue de l'unité de roue (30).

4. Suspension de roue selon l'une quelconque des revendications précédentes, **caractérisée en ce que** l'extrémité supérieure (56) du tube de vérin (48) est montée de manière à pouvoir tourner dans un évidement (58) du châssis (14), et **en ce que** la tige de piston (50) peut être déplacée vers le bas de manière à sortir du tube de vérin (48).

5. Suspension de roue selon l'une quelconque des revendications précédentes, **caractérisée par** une douille de réception (52) tubulaire reliée de manière rigide à l'unité de roue (30) et à l'extrémité inférieure de la tige de piston (50), laquelle douille de réception est mobile de manière axiale par rapport au tube de vérin (48) et entoure de manière à assurer l'étanchéité l'extrémité inférieure du tube de vérin (48).

6. Véhicule de transport de charges lourdes (10) comprenant un châssis, une multitude d'unités de roue (30) dirigeables, une suspension de roue (44) et une direction (32) pour au moins une partie des unités de roue (30), **caractérisé en ce qu'**au moins une suspension de roue (44) selon l'une quelconque des revendications 1 à 5 est réalisée.

7. Véhicule de transport selon la revendication 6, **caractérisé en ce que** la direction (32) comprend un entraînement en rotation venant en prise directement au niveau de l'extrémité supérieure du tube de vérin (48), servant à faire tourner le tube de vérin (48) autour de l'axe central longitudinal (54).

8. Véhicule de transport selon la revendication 6, **caractérisé en ce que** la direction (32) vient en prise, à une distance radiale de l'axe central longitudinal (54), au niveau d'un levier de direction (98) relié de manière rigide au tube de vérin (48).

9. véhicule de transport selon la revendication 8, **caractérisé en ce que** le levier de direction (98) comprend une partie centrale (104) généralement parallèle par rapport au vérin hydraulique (46) et deux parties d'extrémité (106, 108) dépassant de la partie centrale (104) dans une direction latérale, parmi lesquelles la partie d'extrémité supérieure (106) est reliée de manière rigide au tube de vérin (48) et la partie d'extrémité inférieure (108) est reliée de manière articulée à une barre directrice ou une barre d'accouplement (96) de la direction (32).

10. Véhicule de transport selon l'une quelconque des revendications 6 à 9, **caractérisé en ce que** l'axe central longitudinal (54) du vérin hydraulique (46) est orienté de manière perpendiculaire par rapport à une surface de charge (16) du châssis (14).

11. Véhicule de transport selon l'une quelconque des revendications 6 à 10, **caractérisé en ce que** l'unité de roue (30) s'appuie au niveau du châssis (14) exclusivement par l'intermédiaire du vérin hydraulique (46).

12. Véhicule de transport selon l'une quelconque des revendications 6 à 11, **caractérisé en ce que** le vérin hydraulique (46) est un vérin d'équilibrage d'axe.
